# EUROPÄISCHE PATENTANMELDUNG

(11) **EP 2 853 335 A2**
(43) Veröffentlichungstag der Anmeldung: **01.04.2015**
(21) Anmeldenummer: 14186209.4
(22) Anmeldetag: 24.09.2014
(51) Int. Cl.: B23K 9/10, B23K 9/20

(54) **Vorrichtung zum Erzeugen eines Lichtbogenstromes aus gespeicherter elektrischer Energie**

(30) Priorität: 26.09.2013 DE 102013110683
(71) Anmelder: AuTech GmbH, 84144 Geisenhausen (DE)
(72) Erfinder: Flemke, Michael, 84144 Geisenhausen (DE)
(74) Vertreter: Gustorf, Gerhard

(57) **Zusammenfassung**

Vorrichtung zum Erzeugen von Lichtbogenstrom für Hubzündungs-Lichtbogenschweißverfahren mit mindestens einem Kondensator (2.1) als Energiespeicher für mindestens einen Schweißvorgang, dem wenigstens ein Konverter (3.1), bestehend aus einem getakteten Schaltelement (33) mit einer Stromspeicherdrossel (34) und einem Glättungskondensator (35), nachgeschaltet ist, der die im Kondensator (2.1) gespeicherte Energie in eine Spannung am Glättungskondensator (35) so umwandelt, dass dadurch ein geeigneter Lichtbogenstrom zwischen den Schweißelementen (8) und (9) fließt.

## Beschreibung

Die Erfindung betrifft eine Vorrichtung zum Erzeugen eines gesteuerten und geregelten Lichtbogenstromes aus gespeicherter elektrischer Energie für das Hubzündungs-Lichtbogenschweißverfahren.

Für das Aufschweißen von metallischen Befestigungselementen, z.B. Gewindebolzen, auf Werkstücke werden üblicherweise Lichtbogenschweißverfahren eingesetzt. Unterschieden wird dabei zwischen Kondensatorentladungsschweißen und Hubzündungs-Lichtbogenschweißen.

Beim Kondenstorentladungsschweißen wird das aufzuschweißende Element mit seiner Zündspitze, sie ist üblicherweise Bestandteile eines Schweißelementes für das Kondensatorentladungsschweißen, durch Federkraft auf das Werkstück gedrückt. Ein Schaltelement, üblicherweise ein Thyristor, schließt den Schweißstromkreis, so dass die in einem Kondensator gespeicherte Energie zum Stromfluss über das Schweißelement mit seiner Zündspitze und das Werkstück zurück zum Kondensator führt. Der Stromfluss erhitzt die Zündspitze bis zum explosionsartigen Verdampfen, wodurch der Lichtbogen in dem entstehenden Spalt zwischen Schweißelement und Werkstück gezündet wird. Das Schweißelement wird nun durch die Federkraft in Richtung Werkstück bewegt. Während dieser Zeit brennt der Lichtbogen, welcher die Oberfläche von Schweißelement und Werkstück anschmilzt. Sobald das Schweißelement die Werkstückoberfläche berührt, erlischt der Lichtbogen und die entstandene Schmelze erstarrt. Die noch vorhandene Restenergiemenge im Kondensator hat keinen Einfluss mehr auf den Schweißprozess und geht im Kurzschluss "verloren". Der gesamte Schweißvorgang dauert nur wenige 100 Mikrosekunden.

Übliche Geräte zum Kondensatorentladungsschweißen verfügen über Energieinhalte von bis zu 3000 Joule und erzeugen Lichtbogenstromstärken von mehreren tausend Ampere, die jedoch nur für wenige hundert Mikrosekunden fließen und im Lichtbogen dabei Leistungen von mehreren zehn Kilowatt erzeugen.

Die verwendeten Apparaturen (Energiequelle und Schweißelementhalter) sind technisch einfach aufgebaut und haben den Vorteil, dass sie an einphasigen Stromnetzen betrieben werden können. Grund dafür ist, dass die zum Wiederaufladen des energiespeichernden Kondensators benötigte Leistung im Vergleich zum Leistungsbedarf während des Schweißvorgangs sehr gering ist.

Ein großer Nachteil des Kondenstorentladungsschweißens ist die nicht steuerbare Energieabgabe aus dem Kondensator. Ursache ist die Eigenschaft des Schaltelementes (Thyristor), so lange Strom fließen zu lassen, bis die Stromstärke den sogenannten Haltestrom unterschreitet und dadurch die vollständige Entladung des Kondensators erzwingt. Deshalb kann die beim Schweißvorgang umgesetzte Energiemenge nur durch die Höhe der Ladespannung des Kondensators im Verhältnis zu dessen Kapazität gesteuert werden. Wie viel davon tatsächlich dem eigentlichen Schweißprozess zugeführt und nicht zum Aufschmelzen der Zündspitze verbraucht wird oder im Kurzschluss "verloren" geht, unterliegt starken Schwankungen.

Beim Hubzündungs-Lichtbogenschweißen wird das aufzuschweißende Element mit leichter Kraft auf das Werkstück gedrückt. Die Schweißstromquelle wird eingeschaltet und liefert einen sogenannten Vorstrom. Der Schweißprozess wird eingeleitet, indem das Schweißelement bis zu einem geringen Abstand vom Werkstück weggezogen (hochgehoben) wird, wodurch ein Pilot-Lichtbogen zündet. Nun wird die Schweißstromquelle so geschaltet, dass sie den benötigten Lichtbogenstrom für den eigentlichen Schweißprozess liefert. Dieser Strom fließt während der benötigten Schweißzeit, bildet ein Schmelzebad auf dem Werkstück und schmilzt die Stirnfläche des Schweißelementes. Der Prozess wird beendet, indem das Schweißelement in das Schmelzebad eingetaucht und die Schweißstromquelle abgeschaltet wird.
Für dieses Schweißverfahren werden Lichtbogenströme im Bereich von wenigen hundert Ampere bis zu 3000 Ampere verwendet. Die Apparaturen ähneln üblichen Lichtbogenschweißgeräten und erzeugen die benötigten Lichtbogenströme mittels Transformator oder elektronischem Stromversorgungsgerät, auch Wechselrichter oder Inverter genannt. Der Unterschied zu üblichen Lichtbogenschweißgeräten besteht lediglich in der Möglichkeit, den Schweißstrom zeitgenau ein- bzw. auszuschalten und auch zu steuern und/oder zu regeln. Zur zuverlässigen Zündung des Pilotlichtbogens benötigen sie zusätzliche Elemente wie z.B. Vorstromdrosseln im Schweißstromkreis. Diese müssen während des eigentlichen Schweißvorgangs überbrückt werden.

Der Nachteil aller für das Hubzündungs-Lichtbogenschweißen eingesetzten Apparaturen ist, dass die benötige Energiemenge während des Schweißvorgangs direkt aus dem Stromversorgungsnetz entnommen wird. Dazu wird die Stromnetzspannung mittels Transformator oder modernerer Invertertechnik auf die benötigte Schweißspannung zur Erzeugung des Lichtbogenstromes gewandelt. Die Leistungsentnahme aus dem Netz kann dabei kurzzeitig 100 kW und mehr erreichen. Daher ist ein leistungsfähiges Drehstromnetz für den Betrieb bekannter Hubzündungs-Schweißstromquellen notwendig.

Es sind auch Schweißstromquellen neuerer Bauart für das Hubzündungs-Lichtbogenschweißen bekannt, welche an einer einphasigen Netzspannungsversorgung, in der Regel 230V Wechselspannung, betrieben werden können. Sie sind in ihrer Leistungsfähigkeit auf wenige kW bzw. Lichtbogenströme von weniger als 400A beschränkt und üblicherweise in Invertertechnologie aufgebaut. Um eine Überlastung des einphasigen Stromnetzes zu verhindern, benötigen Geräte dieser Art einen überdimensionierten Zwischenkreiskondensator auf der primären Seite des Wechselrichters.

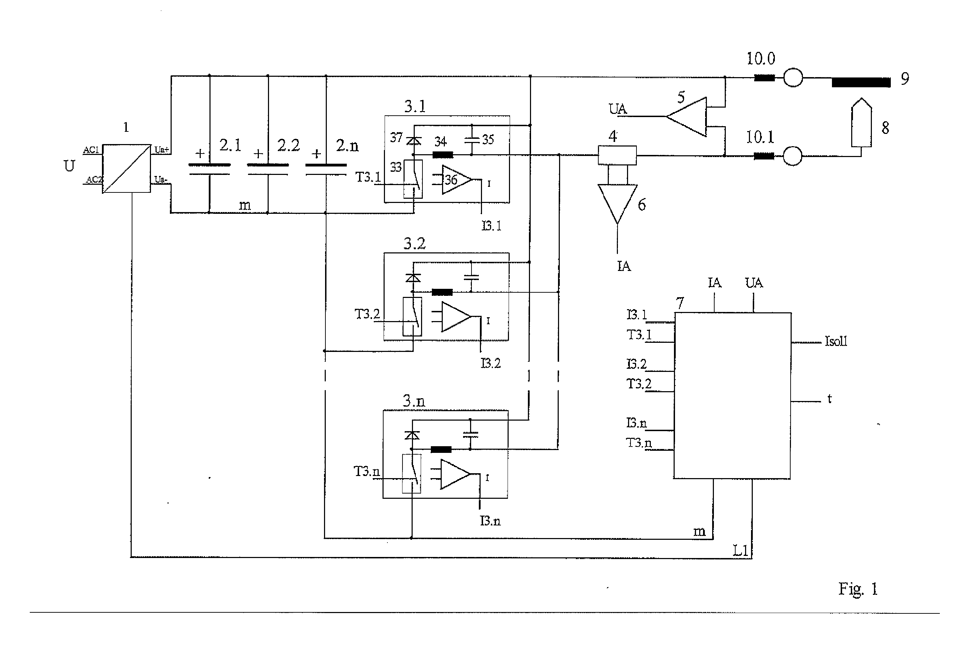

In EP 644 013-A1 ist eine Vorrichtung beschrieben und dargestellt, mit der Schweißelemente für das Hubzündungsverfahren mit einer einphasig gespeisten Schweißstromquelle verschweißt werden können. Die Apparatur verwendet, wie beim Kondensatorentladungsschweißen, Kondensatoren als Energiespeicher. In der beispielhaften Darstellung der Figur 1 werden drei Kondensatoren verwendet. Jedem Kondensator ist ein Thyristor als Schaltelement zugeordnet. Zum Zünden des Pilot-Lichtbogens wird über einen Parallelpfad Energie aus dem Ladestromkreis entnommen. Der Hauptlichtbogenstrom entsteht durch das Zünden der Thyristoren in einer bestimmten Abfolge. Ziel dieser Anordnung ist die Verlängerung der Lichtbogenbrennzeit im Vergleich zum Kondensatorentladungsschweißen, wodurch eine wesentlich bessere Schweißverbindung entsteht. Der Vorteil dieser Apparatur besteht darin, dass der einphasige Stromnetzanschluss nur mit geringer Leistung zum Laden der Kondensatoren belastet wird. Dem steht jedoch eine Anzahl von Nachteilen gegenüber:
- Die Energiemenge, die in die Schweißstelle eingebracht wird, kann nur über die Ladespannung der Kondensatoren bestimmt werden;
- Die Höhe des Lichtbogenstromes ist nicht steuerbar und somit auch nicht regelbar;
- Jeder Kondensator wird auf Grund der Schalteigenschaften der Thyristoren vollständig entladen;
- Die Einjustierung des Schweißablaufes ist nicht unkompliziert hinsichtlich des Abhubes (Lichtbogenbrennspalt), der Abhubzeit im Verhältnis zur gespeicherten Energie und des zeitlichen Ablaufs beim Einschalten der einzelnen Thyristoren.

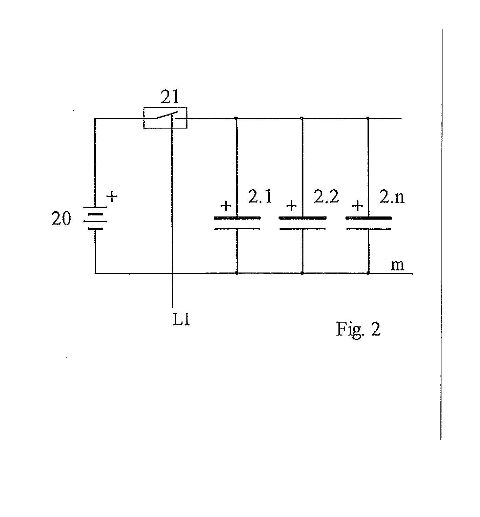

In DE 20 2006 013 368 U1 wird eine Vorrichtung zum Kondensator-Entladungsschweißen beschrieben, die zwei oder mehr steuerbare Schweißstromquellen aufweist. Das Grundprinzip ist in EP 644 013-A1 bereits dargelegt. Die Anordnung nach Figur 2 zeigt deutlich, dass auch hier durch die Verwendung von Thyristoren als Schaltelement eine präzise gesteuerte und geregelte Energieabgabe in den Schweißprozess nicht möglich ist.

In DE 10 2004 062 376 A1 wird unter anderem ein "Verfahren und Netzteil zum Erzeugen eines elektrischen Lichtbogenstromes" beschrieben. Gezeigt und beschrieben wird eine Schaltungstechnik für WIG- (engl. TIG-) Lichtbogenschweißgeräte, wie sie seit langem Stand der Technik ist. Als Stromquelle für das Hubzündungsschweißen verwendet, zeigt sich jedoch ein hoher Schaltungsaufwand dieser Invertertechnologie. Ebenso wird auch bei dieser Apparatur während des Schweißprozesses die gesamte dafür benötigte Energie aus dem Stromversorgungsnetz entnommen.

Der Erfindung liegt die Aufgabe zugrunde, eine Vorrichtung zum Erzeugen eines Lichtbogenstromes zur Verfügung zu stellen, die so konzipiert ist,
- dass Lichtbogenströme von mehreren 100 Ampere zum Hubzündungsschweißen erzeugt werden können;
- dass der Lichtbogenstrom exakt steuer- und regelbar ist;
- dass keine zusätzlichen Bauteile für die Erzeugung des Pilotlichtbogens benötigt werden;
- dass die während des Schweißprozesses benötigte Energie nicht direkt aus dem Stromversorgungsnetz entnommen wird;
- dass der Betrieb an allen weltweit üblichen Einphasen-Stromversorgungsnetzen möglich ist;
- dass alternativ ein elektrochemischer Energiespeicher zur Stromversorgung verwendet werden kann;
- dass ein hoher Wirkungsgrad bei gleichzeitig geringst möglicher Anzahl von Schaltelementen erreicht wird.

Die Lösung dieser Aufgabe ergibt sich aus den Merkmalen des Anspruchs 1. Bevorzugte Weiterbildungen sind Gegenstand der abhängigen Ansprüche.

Die Erfindung ist nachstehend an einem Ausführungsbeispiel erläutert, das in Figur 1 dargestellt ist. Es bedeuten:
1 Ladegerät
2.1, 2.2, 2.n Kondensator
3.1, 3.2, 3.n Konverter
33 Schaltelement
34 Induktivität L, Stromspeicherdrossel
35 Kondensator
36 Strommessvorrichtung
37 Diode
4 Strommesselement
5 Spannungsmesssystem
6 Signalverstärker
7 Steuerung
8 Schweißelement
9 Werkstück
10.0, 10.1 Enststör-Induktivität
U Eingangsspannung vom Stromnetz
T3.1 Steuersignal für 33
I3.1 Stromsignal aus 3.1
m Vorrichtungs- oder Schaltungs-Bezugsmasse
t Sollwertvorgabe für Schweißzeit
Isoll Sollwertvorgabe für Lichtbogenstrom
L 1 Steuersignal

Um den Anschluss an die üblichen Stromversorgungsnetze zu ermöglichen und um deren Überlastung während des Schweißvorganges zu vermeiden wird - wie beim Kondensatorentladungsschweißen - mindestens ein Kondensator 2.1 als Energiespeicher verwendet. Er ist so dimensioniert, dass er die benötigte Energiemenge für mindestens einen Schweißvorgang liefern kann.

Der Kondensator 2.1 oder parallel als Block geschaltete Kondensatoren 2.1, 2.2, 2.n - nachfolgend Kondensatorblock genannt - werden vor dem Schweißvorgang auf eine die benötigte Schweißspannung mehrfach übersteigende Spannung aufgeladen, um einen möglichst hohen Energieinhalt zu erzielen.

In wenigstens einem Konverter 3.1 wird die im Kondensatorblock gespeicherte Energie mit dem getakteten Schaltelement 33 und einer stromglättenden Kombination aus Diode 37, Induktivität 34 und Kondensator 35 in eine stromgeregelte Schweißspannung umgewandelt, die parallel zum Kondensator 35 abgegriffen wird. Über Entstör-Induktivitäten 10.0 und 10.1 - sie sind aus Gründen der EMV (elektromagnetische Verträglichkeit) notwendig - wird die Spannung dem Schweißprozess zugeführt. Der Lichtbogen entsteht und brennt zwischen Werkstück 9 und Schweißelement 8. Somit bildet sich der Stromkreis für den Lichtbogenstrom, beginnend am positiven Pol des Kondensatorblocks 2.1, 2.2, 2.n, über das Werkstück 9, durch den Lichtbogen über das Schweißelement 8, und über die Induktivität 34 und das Schaltelement 33 zurück zum Kondensatorblock.
Gleichzeitig bildet der negative Pol des Kondensatorblocks die Schaltungs-Bezugsmasse m.

Das Schaltelement 33 wird über das von der Steuerung 7 erzeugte Steuersignal T3.1 getaktet eingeschaltet, wobei die Impulslänge im Verhältnis zur Taktfrequenz die Höhe des Lichtbogenstromes bestimmt.

Das Schaltelement 33 ist als Halbleiterbauelement ausgeführt, vorzugsweise ein MOSFET oder IGBT. Durch die bei Halbleiterbauelementen möglichen hohen Taktfrequenzen werden die Baugrößen und damit die Verlustleistungen in der Induktivität 34 und dem Kondensator 35 minimiert.

Gleichzeitig ermöglicht der Halbleiterschalter 33 auch sehr kurze Impulslängen, um den Vorstrom für den Pilotlichtbogen zu erzeugen. Die wegen der EMV notwendigen Induktivitäten 10.0 und 10.1 gewährleisten gleichzeitig die sichere Zündung des Lichtbogens.

Der durch das Schaltelement 33 fließende Strom ist immer höher als der durch die Induktivität 34 und den Kondensator 35 geglättete Lichtbogenstrom. Daher verfügt der Konverter 3.1 über eine Messeinrichtung 36. Sie misst den durch das Schaltelement 33 fließenden Strom und erzeugt das stromproportionale Signal I3.1, welches in die Steuerung 7 zurückgeführt wird. Die Steuerung 7 überwacht damit den Strom im Schaltelement 33 und verhindert durch Verkürzen der Impulslänge und/oder die Unterdrückung von Impulsen die Beschädigung oder Zerstörung des Halbleiterschalters (= Schaltelement 33).

Der Anschluss des Schaltelementes 33 am negativen Pol des Kondensatorblocks bedingt den Anschluss des Werkstücks 9 an den positiven Pol des Kondensatorblocks. Damit befindet sich der negative Pol des Lichtbogens am Schweißelement, so dass die beim Lichtbogenschweißen bevorzugte Polung entsteht.

Gleichzeitig vereinfacht der Anschluss des Schaltelementes 33, bevorzugt ein MOSFET, an der Schaltungs-Bezugsmasse m die Generierung des Steuersignals T3.1, da die Steuerung 7 auch auf die Schaltungs-Bezugsmasse m bezogen ist. Eine galvanische Isolierung der Signalübertragung zwischen der Steuerung 7 und dem Schaltelement 33 ist nicht notwendig. Daraus resultiert bei hohen Taktfrequenzen ein verbessertes Schaltverhalten bei gleichzeitiger Verringerung von Schaltverlusten im Schaltelement.

Die hier gezeigt Schaltungstechnik des Konverters 3.1 ermöglicht die Parallelschaltung weiterer Konverter 3.2 bis 3.n, um den Lichtbogenstrom zu vervielfachen. Die weiteren Konverter 3.2 bis 3.n werden in der gleichen Art und Weise von der Steuerung 7 gesteuert und überwacht wie der Konverter 3.1.

Mit einer solchen Anordnung sind Lichtbogenströme von beispielsweise 800 Ampere bei einer Lichtbogenbrennzeiten von 50 bis 100 ms erzielbar.

Ein weiterer Grund für die Parallelschaltung mehrerer Konverter ist, dass die leistungsführenden Bauelemente eines einzelnen Konverters nur für die durch die Anzahl der Konverter geteilte Gesamtbelastung ausgelegt sein müssen. Dadurch sind sie einer geringeren elektrischen und thermischen Belastung ausgesetzt, was in Folge auch den gesamten Wirkungsgrad der Vorrichtung erhöht. Weiterhin zeichnen sich Bauelemente mit der benötigten geringeren Leistungsfähigkeit durch ein besseres Preis/Leistungsverhältnis aus und sind besser verfügbar.

Mittels Messvorrichtungen 5 für Schweißspannung UA und Strommesselement 4 sowie Signalverstärker 6 für den Lichtbogenstrom IA erhält die Steuerung 7 Istwerte über den Schweißprozess und berechnet daraus die tatsächliche Leistungsabgabe in den Schweißprozess. Daneben erhält die Steuerung 7 die Sollwert-Signale Isoll und t und berechnet, in Verbindung mit den Istwerten, mittels spezieller Algorithmen daraus Impulsbreiten und Taktfrequenzen für die Steuersignale T3.1, T3.2 bis T3.n.

Die Steuerung 7 ist als Mikrocontroller ausgebildet, um die komplexen Steuer- und RegelVerfahren mit ausreichender Geschwindigkeit und Genauigkeit auszuführen.

Bei einem Schweißprozess wird aus dem Kondensatorblock Energie entnommen. Das bewirkt, dass die Spannung am Kondensatorblock sinkt. Um für den nächsten Schweißvorgang wieder ausreichend Energie zur Verfügung zu stellen, wird die Ladespannung des Kondensatorblocks in den Pausen zwischen den Schweißvorgängen wieder auf die vor dem Schweißvorgang vorhandene Spannung hochgeladen. Dazu wird ein Ladegerät 1, vorzugsweise ein elektronisches Netzgerät mit galvanischer Trennung, durch das Signal L1 von der Steuerung 7 entsprechend gesteuert.

Die zum Aufladen oder Nachladen benötigte Leistung wird aus dem Stromversorgungsnetz U entnommen und ist um ein Vielfaches geringer als die Leistung, die während eines Schweißprozesses im Lichtbogen umgesetzt wird.

Nachstehend ein Dimensionierungsbeispiel unter der Vorgabe, dass der Schweißprozess annähernd die gesamte gespeicherte Energie verbraucht hat:
Der Kondensatorblock sei für einen Energieinhalt von 3000 Joule=Ws dimensioniert.

Um die gesamte Energie innerhalb von 5 Sekunden in den Kondensatorblock zu laden, ist ein Ladegerät mit einer Abgabeleistung von nur 600 Watt ausreichend.

Um die Pausenzeit zwischen zwei Schweißvorgängen zu verringern, wird ein Ladegerät 1 mit 1200W Abgabeleistung bevorzugt. Damit halbiert sich die Ladezeit.

Auch unter Berücksichtigung des Wirkungsgrades eines derartigen Ladegerätes wird die Forderung erfüllt, dass die Leistungsaufnahme der gesamten Vorrichtung den Betrieb an allen weltweit üblichen Einphasen-Stromversorgungsnetzen ermöglicht, ohne sie zu überlasten.

Auf Grund des geringen Leistungsbedarfs für das Laden bzw. Nachladen kann, wie Figur 2 zeigt, das Ladegerät 1 durch einen elektrochemischen Energiespeicher 20, vorzugsweise ein Akku, ersetzt werden. Die Nennspannung des Akkus 20 entspricht der gewünschten maximalen Ladespannung der Kondensatorbatterie. Der Akku 20 ist über ein Schaltelement 21 mit dem Kondensatorblock verbunden. Das Schaltelement 21 wird über das Signal L1 von der Steuerung 7 gesteuert, um den Kondensatorblock aufzuladen bzw. in den Pausen zwischen den Schweißvorgängen nachzuladen. Es dient auch dazu, den Akku von der Kondensatorbatterie und den Konvertern zu trennen, um im Störungsfall einen unkontrollierten Stromfluss zu verhindern.

Die Unabhängigkeit von einem Stromversorgungsnetz ermöglicht den Einsatz der Vorrichtung auf Baustellen oder bei ungenügender Netz-Stromversorgung.

## Patentansprüche

1. Vorrichtung zum Erzeugen von Lichtbogenstrom für Hubzündungs-Lichtbogenschweißverfahren, **gekennzeichnet durch** mindestens einen Kondensator (2.1) als Energiespeicher für mindestens einen Schweißvorgang, dem wenigstens ein Konverter (3.1), bestehend aus einem getakteten Schaltelement (33) mit einer Stromspeicherdrossel (34) und einem Glättungskondensator (35), nachgeschaltet ist, der die im Kondensator (2.1) gespeicherte Energie in eine Spannung am Glättungskondensator (35) so umwandelt, dass **dadurch** ein geeigneter Lichtbogenstrom zwischen den Schweißelementen (8) und (9) fließt.

2. Vorrichtung nach Anspruch 1, **dadurch gekennzeichnet, dass** das Schaltelement (33) des Konverters (3.1) und eine Steuerung (7) am negativen Pol des Kondensators (2.1), der Schaltungs-Bezugsmasse m, angeschlossen sind, so dass ein Taktsignal (T3.1) ohne Hilfsmittel zur galvanischen Trennung an das Schaltelement (33) geleitet wird, um so das Schaltverhalten des Schaltelements (33) zu verbessern und die darin entstehende Verlustleistung zu verringern.

3. Vorrichtung nach Anspruch 1 oder 2, **dadurch gekennzeichnet, dass** der Konverter (3.1) über eine Messeinrichtung (36) verfügt, die dazu dient, ein stromproportionales Signal (I3.1) des durch das Schaltelement (33) fließenden Stromes an die Steuerung (7) zu leiten.

4. Vorrichtung nach einem der vorhergehenden Ansprüche, **dadurch gekennzeichnet, dass** im Lichtbogenstromkreis liegende Induktivitäten (10.0; 10.1) gleichzeitig die Entstörfunktion für die EMV und die Funktion einer Drossel für die Vorstromzündung übernehmen.

5. Vorrichtung nach einem der vorhergehenden Ansprüche, **dadurch gekennzeichnet, dass** mehrere Konverter (3.2, 3.n) zu dem Konverter (3.1) parallel geschaltet sind und mit den Signalen (T3.2; I3.2; T3.n; I3.n) unabhängig voneinander von der Steuerung (7) gesteuert und überwacht werden werden.

6. Vorrichtung nach einem der vorhergehenden Ansprüche, **dadurch gekennzeichnet, dass** der Energiespeicher in den Pausen zwischen den Schweißvorgängen mit einem Ladegerät (1) geladen oder nachgeladen wird, dessen Leistungsaufnahme so dimensioniert ist, dass es aufgrund des geringen Leistungsbedarfs an allen weltweit üblichen Einphasen-Stromversorgungsnetzen betrieben werden kann.

7. Vorrichtung nach einem der Ansprüche 1 bis 5, **dadurch gekennzeichnet, dass** das Ladegerät (1) durch einen elektrochemischen Energiespeicher (20) ersetzt ist, der mit einem Schaltelement (21) mit dem Energiespeicher (2.1, 2.2, 2.n) verbunden ist, wobei die Nennspannung des elektrochemischen Energiespeichers (20) der maximalen Ladespannung des Energiespeichers (2.1, 2.2, 2.n) entspricht.

8. Vorrichtung nach Anspruch 7, **dadurch gekennzeichnet, dass** der elektromechanische Energiespeicher (20) ein Akkumulator ist.

9. Vorrichtung nach Anspruch 7 oder 8, **dadurch gekennzeichnet, dass** das Schaltelement (21) mit dem Signal (L1) von der Steuerung (7) gesteuert wird, so dass Energie aus dem elektrochemischen Energiespeicher (20) zum Laden oder Nachzuladen in den Energiespeicher (2.1, 2.2, 2.n) fließt.
